# DEMANDE DE BREVET EUROPEEN

(11) **EP 4 459 834 A1**
(43) Date de publication de la demande: **06.11.2024**
(21) Numéro de dépôt: 24172350.1
(22) Date de dépôt: 25.04.2024
(51) Int. Cl.: H02J 7/00, H02J 50/80, H02J 50/90, H04B 5/00, H04B 5/26, H04B 5/79

(54) **DISPOSITIF ÉMETTEUR DE CHARGE CONFIGURÉ POUR RÉALISER UNE CHARGE SANS FIL PAR CHAMP PROCHE D'UN DISPOSITIF RÉCEPTEUR DE PUISSANCE**

(30) Priorité: 02.05.2023 FR 2304401
(71) Demandeur: STMicroelectronics International N.V., 1228 Plan-les-Ouates, Geneva (CH)
(72) Inventeur: TRAMONI, Alexandre, 83330 Le Beausset (FR); GRUNDRICH, Christophe, 38000 Grenoble (FR); KOVACIC, Kosta, 2312 Orehova Vas (FR)
(74) Mandataire: Casalonga

(57) **Abrégé**

Selon un aspect, il est proposé un dispositif émetteur de charge configuré pour réaliser une charge sans fil par champ proche d'un dispositif récepteur de puissance, le dispositif émetteur de charge comprenant un circuit de sécurisation de charge (CSC) comportant :
- un circuit de détection (LPCD) configuré pour détecter un déplacement du dispositif récepteur de puissance par rapport au dispositif émetteur de charge,
- un circuit de contrôle de charge (LGC) configuré pour stopper la charge lorsqu'un déplacement du dispositif récepteur de puissance est détecté.

## Description

Des modes de réalisation et de mise en oeuvre concernent la technologie NFC, et plus particulièrement la recharge sans fil utilisant la technologie NFC.

La recharge sans fil permet de charger des dispositifs électroniques sans utiliser de branchement physique.

Certaines solutions de recharge sans fil utilisent des antennes volumineuses. L'utilisation d'une antenne volumineuse pour effectuer la recharge sans fil limite les applications possibles de cette recharge. Ces solutions ne peuvent pas être utilisées pour charger des dispositifs électroniques de faibles dimensions et à faible puissance.

La recharge sans fil utilisant la technologie NFC (acronyme de l'anglais « Near Field Communication ») présente l'avantage d'être peu exigeante en termes d'occupation spatiale et permet d'utiliser des antennes sur circuit imprimé.

La recharge sans fil utilisant la technologie NFC permet de réaliser une recharge d'un dispositif électronique sans fil sur une faible distance, par exemple de l'ordre de 10 cm.

La technologie NFC est une plateforme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC. La recharge sans fil utilisant la technologie NFC est définie par la version 2.0 de la spécification NFC WLC (« WireLess Charging ») publiée en Octobre 2021 par le NFC Forum.

La recharge sans fil NFC permet notamment de charger des dispositifs électroniques relativement petits, tels que des écouteurs sans fils et des montres intelligentes, des dispositifs de suivi de forme physique, ou d'autres dispositifs électroniques de l'Internet des Objets. Par exemple, des dispositifs électroniques peuvent être chargés par recharge sans fil NFC à partir d'un téléphone intelligent ou à partir d'une station de recharge dédiée.

Plus particulièrement, la recharge sans fil NFC repose sur un dispositif émetteur de charge (également désigné par le terme anglais « poller ») et sur un dispositif récepteur de puissance (également désigné par le terme anglais « listener). L'émetteur de charge est utilisé pour charger le récepteur de puissance.

Afin d'améliorer le transfert d'énergie entre l'émetteur de charge et le récepteur de puissance, il convient d'utiliser un circuit d'adaptation d'impédance. Lors d'une charge, l'impédance est adaptée lorsque le récepteur de puissance est en face de l'émetteur de charge.

Néanmoins, une telle adaptation d'impédance lors de la charge présente un risque pour l'émetteur de charge si le récepteur de puissance est déplacé en l'éloignant de l'émetteur de charge au cours de la charge.

En particulier, si l'émetteur de charge émet une puissance proche d'une puissance maximale lorsque le récepteur de puissance est éloigné de l'émetteur de charge alors l'impédance de l'émetteur de charge n'est plus adaptée. Cela peut générer un signal de charge ayant une puissance élevée pouvant chauffer l'émetteur de charge, voire endommager l'émetteur de charge.

Afin de stopper la génération d'un signal de charge de puissance trop élevée lorsque le récepteur de puissance est éloigné de l'émetteur de charge, il est possible d'utiliser des moyens de mesure de température ou de courant permettant de détecter une hausse de la température de l'émetteur de charge ou bien une hausse du courant du signal de charge généré dans l'émetteur de charge.

Ces moyens de mesure sont alors utilisés pour stopper la génération du signal de charge lorsque la température ou le courant du signal de charge dépassent des seuils prédéfinis. Néanmoins, en utilisant de tels moyens de mesure, l'arrêt de la génération du signal de charge intervient tardivement car l'émetteur de charge a déjà chauffé.

Il existe donc un besoin de proposer une solution permettant de sécuriser de manière rapide et efficace l'émetteur de charge au cours d'une charge d'un récepteur de puissance.

Selon un aspect, il est proposé un dispositif émetteur de charge configuré pour réaliser une charge sans fil par champ proche d'un dispositif récepteur de puissance, le dispositif émetteur de charge comprenant un circuit de sécurisation de charge comportant :
- un circuit de détection configuré pour détecter un déplacement du dispositif récepteur de puissance par rapport au dispositif émetteur de charge,
- un circuit de contrôle de charge configuré pour stopper la charge lorsqu'un déplacement du dispositif récepteur de puissance est détecté.

Un tel dispositif émetteur de charge permet d'arrêter la charge dès les premiers mouvements du dispositif récepteur de puissance lorsque ce dernier est déplacé en l'éloignant du dispositif émetteur de charge.

La charge est donc arrêtée de manière anticiper dès les premiers mouvements du dispositif récepteur de puissance pour éviter de générer un signal radiofréquence de charge ayant une puissance pouvant endommager le dispositif émetteur de charge.

Un tel arrêt anticipé de la charge permet d'augmenter la durée de vie de l'émetteur de charge.

Dans un mode de réalisation avantageux, le dispositif émetteur de charge comprend une antenne configurée pour, au cours de la charge, émettre un signal radiofréquence de charge et détecter un signal radiofréquence à l'extérieur du dispositif émetteur de charge, le circuit de détection étant configuré pour détecter un déplacement du dispositif récepteur de puissance à partir du signal radiofréquence détecté par ladite antenne.

Un tel circuit de détection est simple et peu coûteux. Un tel circuit de détection peut également être utilisé pour détecter un dispositif de communication en champ proche à proximité de l'émetteur de charge afin de démarrer une communication en champ proche entre le dispositif émetteur de charge et le dispositif de communication en champ proche.

De préférence, le circuit de détection est configuré pour :
- extraire une amplitude et une phase du signal radiofréquence détecté par l'antenne, puis
- détecter un déplacement du dispositif récepteur de puissance par rapport au dispositif émetteur de charge à partir d'une comparaison entre l'amplitude et la phase extraites et des seuils représentatifs d'un tel déplacement, puis
- générer un signal de détection lorsqu'un tel déplacement est détecté.

Avantageusement, le circuit de contrôle de charge comprend un circuit logique configuré pour recevoir le signal de détection et pour stopper la charge lorsqu'un déplacement du dispositif récepteur de puissance est détecté.

Dans un mode de réalisation avantageux, le dispositif émetteur de charge comprend au moins un pilote radiofréquence configuré pour générer ledit signal radiofréquence de charge, le circuit de contrôle de charge étant configuré pour arrêter le pilote radiofréquence lorsqu'un déplacement du dispositif récepteur de puissance est détecté par le circuit de détection.

Avantageusement, le dispositif émetteur de charge comprend en outre un circuit d'adaptation d'impédance entre ledit au moins un pilote radiofréquence et ladite antenne, l'impédance du circuit d'adaptation étant adaptée lorsque l'antenne du récepteur de puissance est placée en face et à proximité de l'antenne de l'émetteur de charge.

Selon un autre aspect, il est proposé un procédé de charge sans fil par champ proche d'un dispositif récepteur de puissance à partir d'un dispositif émetteur de charge, le procédé comprenant une mise en oeuvre d'un circuit de sécurisation de charge de l'émetteur de charge au cours de la charge, le circuit de sécurisation de charge comportant :
- un circuit de détection configuré pour détecter un déplacement du dispositif récepteur de puissance par rapport au dispositif émetteur de charge,
- un circuit de contrôle de charge configuré pour stopper la charge lorsqu'un déplacement du dispositif récepteur de puissance est détecté.

Dans un mode de réalisation, le procédé comprend :
- une détection, par le circuit de détection, d'un déplacement du dispositif récepteur de puissance par rapport au dispositif émetteur de charge, puis
- un arrêt, par le circuit de contrôle de charge, de la charge suite à la détection dudit déplacement.

Avantageusement, le procédé comprend :
- une extraction, par le circuit de détection d'une amplitude et d'une phase du signal radiofréquence détecté par l'antenne, puis
- une détection d'un déplacement du dispositif récepteur de puissance par rapport au dispositif émetteur de charge à partir d'une comparaison entre l'amplitude et la phase extraites et des seuils représentatifs d'un tel déplacement, puis
- une génération d'un signal de détection lorsqu'un tel déplacement est détecté.

De préférence, le procédé comprend, au cours de la charge, une émission, par une antenne du dispositif émetteur de charge, d'un signal radiofréquence de charge et une détection par cette antenne d'un signal radiofréquence à l'extérieur du dispositif émetteur de charge, le déplacement du dispositif récepteur de puissance par rapport au dispositif émetteur de charge étant détecté par le circuit de détection à partir du signal radiofréquence détecté par ladite antenne.

Avantageusement, le procédé comprend une réception, par un circuit logique du circuit de contrôle de charge, du signal de détection et un arrêt, par ce circuit logique, de la charge lorsqu'un déplacement du dispositif récepteur de puissance est détecté.

Dans un mode de réalisation, le procédé comprend en outre une génération dudit signal radiofréquence de charge par au moins un pilote radiofréquence, et un arrêt, par le circuit de contrôle de charge, du pilote radiofréquence lorsqu'un déplacement du dispositif récepteur de puissance est détecté par le circuit de détection.

D'autres avantages et caractéristiques de l'invention apparaîtront à l'examen de la description détaillée de modes de réalisation, nullement limitatifs, et des dessins annexés sur lesquels :
[Fig 1]
[Fig 2]

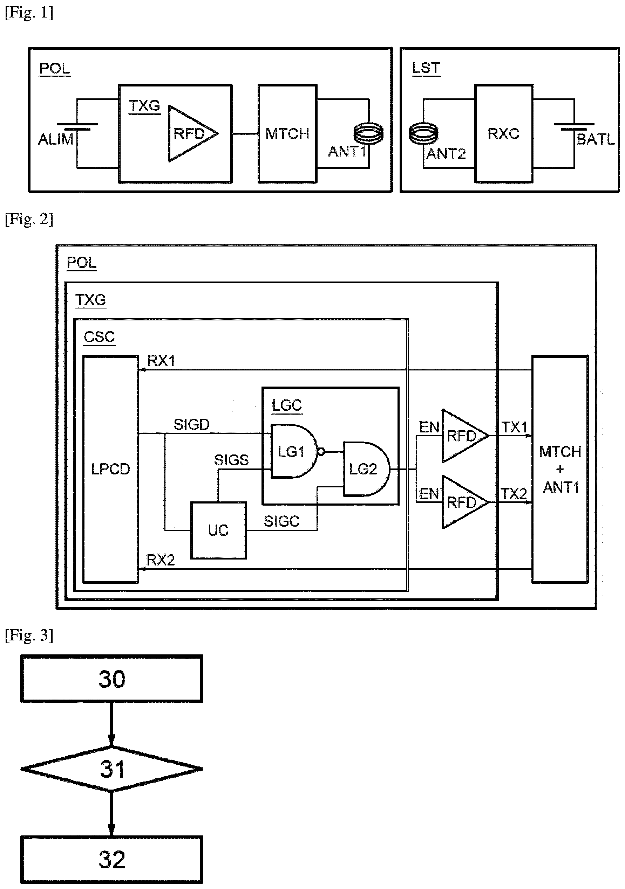

[Fig 3] illustrent des modes de réalisation et de mise en oeuvre de l'invention.

La figure 1 illustre un mode de réalisation d'un système SYS de communication en champ proche. Le système SYS comprend un dispositif émetteur de charge POL et un dispositif récepteur de puissance LST.

L'émetteur de charge POL est généralement désigné en anglais par l'expression « poller ». Le récepteur de puissance LST est généralement désigné en anglais par l'expression « listener ».

L'émetteur de charge POL est configuré pour charger le récepteur de puissance LST en utilisant la technologie NFC (acronyme de l'anglais « Near field communication » signifiant communication en champ proche).

L'émetteur de charge POL peut être une station de recharge dédiée ou bien un téléphone intelligent par exemple.

Le récepteur de puissance LST peut être un dispositif électronique relativement petit, tel qu'un écouteur sans fils, une montre intelligente, un dispositif de suivi de forme physique, ou un autre dispositif électronique de l'Internet des Objets.

L'émetteur de charge POL comprend un circuit TXG de génération de signal de charge. Le circuit TXG de génération de signal de charge comporte une alimentation ALIM et des pilotes radiofréquences RFD.

L'émetteur de charge POL comprend également un circuit d'adaptation d'impédance MTCH et une antenne ANT1.

Le récepteur de puissance comprend une batterie BATL, une antenne ANT2 et un circuit de réception RXC.

L'émetteur de charge POL est adapté pour charger la batterie BATL du récepteur de puissance LST lorsque l'antenne ANT2 du récepteur de puissance LST est placée proche et en face de l'antenne ANT1 de l'émetteur de charge POL via une recharge NFC.

La recharge NFC utilise l'induction électromagnétique générée à partir de l'émetteur de charge POL pour fournir de l'électricité au récepteur de puissance LST afin de recharger sa batterie BATL.

En particulier, les pilotes radiofréquences RFD (en anglais « radiofrequency (RF) drivers ») sont configurés pour générer un signal de charge à transmettre à l'antenne A2 du récepteur de puissance LST via l'antenne ANT1. Le signal de charge est généré à partir de l'alimentation ALIM de l'émetteur de charge. L'alimentation ALIM peut être une batterie ou bien une alimentation secteur.

Les pilotes radiofréquences peuvent par exemple comprendre des amplificateurs permettant de générer le signal de charge.

Les pilotes radiofréquences RFD sont configurés pour fonctionner en opposition de phase selon un mode différentiel afin d'améliorer la puissance du signal de charge. En variante, il est possible d'utiliser un unique pilote radiofréquence RFD pour un mode de fonctionnement asymétrique (en anglais « single-ended mode »).

L'antenne ANT1 de l'émetteur de charge POL est configurée pour générer un champ électromagnétique correspondant au signal de charge généré par les pilotes radiofréquences RFD.

Le champ électromagnétique présente alors une fréquence de l'ordre de 13,56 MHz et une force supérieure à 1,5 ampères/mètre en moyenne quadratique (c'est-à-dire « RMS » acronyme de l'anglais « Root Mean Square »), notamment comprise entre 1,5 et 7,5 ampères/mètre telle que définie par la norme ISO14443, voire supérieure à 7,5 ampères/mètre telle que définie dans la version 2.0 de la spécification NFC WLC (« WireLess Charging ») publiée en Octobre 2021 par le NFC Forum.

L'antenne A2 du récepteur de puissance est configurée pour recevoir le champ électromagnétique émis par l'antenne ANT1 de l'émetteur de charge POL de manière à recevoir le signal de charge généré par l'émetteur de charge POL. Ce signal de charge est ensuite transmis à un circuit de réception NFC avant d'alimenter la batterie BATL du récepteur de puissance LST.

Plus particulièrement, la recharge NFC comprend une première phase dans laquelle l'émetteur de charge POL émet un champ électromagnétique relativement faible pour réaliser une négociation avec le récepteur de puissance LST. Une fois la négociation validée, l'émetteur de charge POL peut émettre le signal de charge pour charger le récepteur de puissance LST.

Afin d'améliorer la puissance transmise entre l'émetteur de charge POL et le récepteur de puissance LST, l'antenne ANT1 et l'antenne ANT2 sont identiques et l'antenne ANT2 est placée en face et à proximité de l'antenne ANT1 lors de la recharge NFC. Par exemple, l'antenne ANT2 est placée à une distance inférieure à 5 mm, notamment en plaçant le récepteur de puissance LST contre l'émetteur de charge POL.

Le circuit d'adaptation d'impédance MTCH permet d'adapter l'impédance vue par les pilotes radiofréquences RFD. L'impédance est adaptée lorsque le récepteur de puissance LST est placé en face et à proximité de l'émetteur de charge POL.

La figure 2 illustre plus en détails un mode de réalisation d'un émetteur de charge POL. En particulier, le circuit TXG de génération de signal de charge comprend un circuit de sécurisation de charge CSC. Le circuit de sécurisation de charge CSC est configuré pour stopper la génération du signal de charge dès que le récepteur de puissance LST est déplacé par rapport à l'émetteur de charge POL.

Le circuit de sécurisation de charge CSC comprend un circuit de détection LPCD. Le circuit de détection LPCD est par exemple un circuit électronique tel que celui décrit dans la demande de brevet européenne ayant pour numéro de publication EP 3 672 091.

Le circuit de détection LPCD est configuré pour détecter un changement d'amplitude et/ou de phase dans le signal radiofréquence RX1, RX2 capté par l'antenne ANT 1 lorsque l'émetteur de charge POL procède à une charge du récepteur de puissance LST.

La détection d'un changement d'amplitude et/ou de phase dans le signal radiofréquence RX1, RX2 permet de détecter un déplacement du récepteur de puissance LST par rapport à l'émetteur de charge POL. Lorsqu'un changement d'amplitude et/ou de phase est détecté alors le circuit de détection LPCD est configuré pour émettre un signal de détection SIGD.

Ainsi, le circuit de détection LPCD n'est pas seulement utilisé pour détecter la présence d'un récepteur de puissance LST en début de communication NFC mais aussi pour détecter un déplacement du récepteur de puissance POL par rapport à l'émetteur de charge LST.

Plus particulièrement, le circuit de détection LPCD comprend un convertisseur abaisseur IQ (également désigné par l'expression anglaise « In-Phase Quadrature (IQ) downconverter ») associés à des filtres passe-bas de manière à pouvoir convertir un signal radiofréquence RX1, RX2 reçu depuis l'antenne ANT1 en deux signaux continus, respectivement indicatifs de l'amplitude et de la phase du signal radiofréquence RX1, RX2. En variante, il est possible de prévoir un circuit de détection LPCD comprenant un convertisseur analogique-numérique pour extraire l'amplitude et la phase du signal radiofréquence RX1, RX2.

Ces signaux continus sont ensuite comparés à des seuils afin de détecter des changements d'amplitude et de phase du signal radiofréquence RX1, RX2 révélateurs d'un mouvement d'un récepteur de puissance LST, notamment dans le champ électromagnétique de l'émetteur de charge POL. Ces seuils sont définis lors d'une phase de calibration de l'émetteur de charge POL de manière à être représentatif d'un déplacement du récepteur de puissance LST.

La phase de calibration est réalisée en plaçant un récepteur de puissance LST en face de l'émetteur de charge POL. Ces seuils sont indépendants des seuils pouvant être définis pour détecter la présence d'un récepteur de puissance LST.

Une fois la transmission NFC arrêtée, l'émetteur de charge POL peut être configuré pour réaliser une nouvelle phase de sondage de manière à détecter la présence du récepteur de puissance LST pour continuer la charge du récepteur de puissance POL.

Le circuit de sécurisation de charge CSC comprend un circuit logique LGC. Le circuit logique LGC comprend une porte logique LG1 de type NON-ET (en anglais « NAND ») et une porte logique LG2 de type ET (en anglais « AND »).

La porte logique LG1 de type NON ET présente une première entrée connectée au circuit de détection LPCD de manière à pouvoir recevoir le signal de détection SIGD et une deuxième entrée configurée pour recevoir un signal d'état de charge SIGS permettant d'indiquer si une recharge est activée. Le signal d'état de charge peut être généré par une unité de contrôle UC de l'émetteur de charge POL. La porte logique LG1 de type NON ET présente également une sortie connectée à une première entrée de la porte logique LG2 de type ET.

La porte logique LG2 de type ET présente également une deuxième entrée configurée pour recevoir un signal de contrôle SIGC provenant de l'unité de contrôle UC. Ce signal de contrôle SIGC peut être commandé à partir d'un logiciel.

La porte logique LG2 de type ET présente une sortie connectée aux entrées d'activation EN des pilotes radiofréquences RFD.

La porte logique LG1 de type NON ET et la porte logique LG2 de type ET permettent d'activer ou désactiver les pilotes radiofréquences RFD selon certaines conditions.

En particulier, les pilotes radiofréquences RFD sont activés lorsqu'une transmission NFC est souhaitée, notamment pour une communication NFC ou bien pour une recharge NFC et lorsqu'un récepteur de puissance LST est situé à proximité de l'émetteur de charge POL.

Plus particulièrement, les pilotes radiofréquences RFD sont activés uniquement lorsque les conditions suivantes sont respectées :
- la transmission NFC est activée par le signal de contrôle SIGC, et
- la charge est activée lorsque le récepteur de puissance est disposé à proximité de l'émetteur de charge, c'est-à-dire lorsque le signal d'état de charge SIGS est à 1 et lorsque le signal de détection SIGD est à 0.

Le circuit de sécurisation de charge permet de désactiver les pilotes radiofréquences lors d'une charge si un déplacement du récepteur de puissance par rapport à l'émetteur de charge est détecté par le circuit de détection. En particulier, le circuit de détection détecte un déplacement du récepteur de puissance lorsque l'amplitude et la phase du signal radiofréquence RX1, RX2 dépassent des seuils prédéfinis.

L'arrêt des pilotes radiofréquences RFD lorsqu'un déplacement du récepteur de puissance LST est détecté permet de stopper la transmission NFC lorsque le récepteur de puissance LST s'éloigne de l'émetteur de charge POL.

En particulier, l'éloignement du récepteur de puissance LST peut entraîner une modification, notamment une baisse, de l'impédance vue par les pilotes radiofréquences RFD de l'émetteur de charge POL.

La modification de cette impédance peut générer un signal radiofréquence ayant une puissance pouvant chauffer l'émetteur de charge POL voire l'endommager, notamment en brûlant des éléments de la batterie de l'émetteur de charge.

L'arrêt de la transmission NFC obtenu grâce au circuit de sécurisation CSC permet d'éviter de générer un signal radiofréquence TX1, TX2 ayant une puissance relativement élevée lorsque le récepteur de puissance LST est trop éloigné de l'émetteur de charge POL.

Plus particulièrement, le circuit de sécurisation CSC permet d'arrêter la génération du signal radiofréquence TX1, TX2 dès que le récepteur de puissance LST est déplacé et non pas lorsque le récepteur de puissance LST est déjà trop éloigné de l'émetteur de charge POL. L'arrêt de la génération du signal radiofréquence TX1, TX2 est donc réalisé de manière anticipée pour éviter de chauffer l'émetteur de charge POL.

Un tel circuit de sécurisation CSC permet donc également d'améliorer la durée de vie de l'émetteur de charge POL. En outre, un tel circuit de sécurisation CSC est peu coûteux.

Bien entendu, la présente invention est susceptible de diverses variantes et modifications qui apparaîtront à l'homme de l'art. Par exemple, à la place d'utiliser le circuit logique LGC, l'arrêt des pilotes radiofréquences RFD peut être commandé par l'unité de contrôle UC dès qu'un déplacement du récepteur de puissance LST est détecté. Néanmoins, l'utilisation du circuit de logique LGC permet d'arrêter les pilotes radiofréquences RFD plus rapidement par rapport à un contrôle numérique réalisé par l'unité de commande UC.

La figure 3 illustre un mode de mise en oeuvre d'un procédé de charge sans fil par champ proche d'un dispositif récepteur de puissance LST à partir d'un dispositif émetteur de charge POL, décrits précédemment en relation avec les figures 1 et 2.

Le procédé comprend une charge 30 de la batterie BATL du récepteur de puissance à partir d'un signal radiofréquence de charge généré par l'émetteur de charge POL.

En particulier, la charge comprend une première phase dans laquelle l'émetteur de charge POL émet un champ électromagnétique relativement faible pour réaliser une négociation avec le récepteur de puissance LST. Une fois la négociation validée, l'émetteur de charge POL peut procéder à la charge du récepteur de puissance.

En particulier, lors de la charge du récepteur de puissance, les pilotes radiofréquences de l'émetteur de charge POL génèrent un signal radiofréquence de charge TX1, TX2. Ce signal radiofréquence de charge TX1, TX2 est transmis à l'antenne ANT1 de l'émetteur de charge POL via le circuit d'adaptation d'impédance MTCH.

L'antenne ANT1 émet ensuite un champ électromagnétique correspondant au signal radiofréquence de charge. Ce champ électromagnétique est ensuite capté par l'antenne ANT2 du récepteur de puissance qui le convertit en un signal électrique de charge. Ce signal électrique de charge est ensuite fourni à la batterie BATL du récepteur de puissance de manière à la recharger.

Au cours de la charge, le procédé comprend un contrôle 31 continu de l'amplitude et la phase du signal radiofréquence RX1, RX2 détecté par l'antenne ANT1 de l'émetteur de charge POL (étape 31). Ce contrôle 31 est réalisé par le circuit de détection LPCD du circuit de sécurisation de charge CSC de l'émetteur de charge POL contrôle.

En particulier, l'amplitude et la phase du signal radiofréquence RX1, RX2 sont comparés à des seuils représentatifs d'un déplacement du récepteur de puissance LST par rapport à l'émetteur de charge POL. Comme indiqué précédemment, ces seuils sont définis lors d'une phase de calibration de l'émetteur de charge POL de manière à être représentatif d'un déplacement du récepteur de puissance LST.

Si le circuit de détection LPCD détecte une amplitude et une phase supérieure à ces seuils représentatifs d'un déplacement du récepteur de puissance LST par rapport à l'émetteur de charge POL, alors le procédé comprend un arrêt 32 de la charge du récepteur de puissance. Dans ce cas, les pilotes radiofréquences RFD de l'émetteur de charge sont désactivés de manière à stopper la génération du signal radiofréquence de charge TX1, TX2. En particulier, les pilotes radiofréquences RFD sont désactivés à l'aide du circuit logique LGC recevant le signal de détection généré par le circuit de détection LPCD.

Si le circuit de détection LPCD détecte une amplitude et une phase inférieure ou égale à ces seuils, alors la charge du récepteur de puissance peut continuer. Dans ce cas, les pilotes radiofréquences RFD continuent de générer le signal radiofréquence de charge TX1, TX2.

## Revendications

1. Dispositif émetteur de charge configuré pour réaliser une charge sans fil par champ proche d'un dispositif récepteur de puissance, le dispositif émetteur de charge comprenant un circuit de sécurisation de charge (CSC) comportant :
- un circuit de détection (LPCD) configuré pour détecter un déplacement du dispositif récepteur de puissance par rapport au dispositif émetteur de charge,
- un circuit de contrôle de charge (LGC) configuré pour stopper la charge lorsqu'un déplacement du dispositif récepteur de puissance est détecté.

2. Dispositif selon la revendication 1, comprenant une antenne (ANT1) configurée pour, au cours de la charge, émettre un signal radiofréquence de charge (TX1, TX2) et détecter un signal radiofréquence (RX1, RX2) à l'extérieur du dispositif émetteur de charge, le circuit de détection étant configuré pour détecter un déplacement du dispositif récepteur de puissance à partir du signal radiofréquence détecté par ladite antenne (ANT1).

3. Dispositif selon la revendication 2, dans lequel le circuit de détection (LPCD) est configuré pour :
- extraire une amplitude et une phase du signal radiofréquence (RX1, RX2) détecté par l'antenne (ANT1), puis
- détecter un déplacement du dispositif récepteur de puissance par rapport au dispositif émetteur de charge à partir d'une comparaison entre l'amplitude et la phase extraites et des seuils représentatifs d'un tel déplacement, puis
- générer un signal de détection (SIGD) lorsqu'un tel déplacement est détecté.

4. Dispositif selon la revendication 3, dans lequel le circuit de contrôle de charge (LGC) comprend un circuit logique configuré pour recevoir le signal de détection (SIGD) et pour stopper la charge lorsqu'un déplacement du dispositif récepteur de puissance est détecté.

5. Dispositif selon l'une des revendications 2 à 4, comprenant au moins un pilote radiofréquence (RFD) configuré pour générer ledit signal radiofréquence de charge, le circuit de contrôle de charge (LGC) étant configuré pour arrêter le pilote radiofréquence lorsqu'un déplacement du dispositif récepteur de puissance est détecté par le circuit de détection (LPCD).

6. Dispositif selon la revendication 5, comprenant en outre un circuit d'adaptation d'impédance (MTCH) entre ledit au moins un pilote radiofréquence et ladite antenne, l'impédance du circuit d'adaptation étant adaptée lorsque l'antenne (ANT2) du récepteur de puissance est placée en face et à proximité de l'antenne (ANT1) de l'émetteur de charge.

7. Procédé de charge sans fil par champ proche d'un dispositif récepteur de puissance (LST) à partir d'un dispositif émetteur de charge (POL), le procédé comprenant une mise en oeuvre d'un circuit de sécurisation de charge (CSC) de l'émetteur de charge au cours de la charge, le circuit de sécurisation de charge comportant :
- un circuit de détection (LPCD) configuré pour détecter un déplacement du dispositif récepteur de puissance par rapport au dispositif émetteur de charge,
- un circuit de contrôle de charge (LGC) configuré pour stopper la charge lorsqu'un déplacement du dispositif récepteur de puissance est détecté.

8. Procédé selon la revendication 7 comprenant :
- une détection, par le circuit de détection, d'un déplacement du dispositif récepteur de puissance par rapport au dispositif émetteur de charge, puis
- un arrêt, par le circuit de contrôle de charge (LGC), de la charge suite à la détection dudit déplacement.

9. Procédé selon la revendication 8, comprenant, au cours de la charge, une émission, par une antenne (ANT1) du dispositif émetteur de charge, d'un signal radiofréquence de charge (TX1, TX2) et une détection par cette antenne (ANT1) d'un signal radiofréquence (RX1, RX2) à l'extérieur du dispositif émetteur de charge, le déplacement du dispositif récepteur de puissance par rapport au dispositif émetteur de charge étant détecté par le circuit de détection (LPCD) à partir du signal radiofréquence détecté par ladite antenne (ANT1).

10. Procédé selon la revendication 9, comprenant :
- une extraction, par le circuit de détection d'une amplitude et d'une phase du signal radiofréquence (RX1, RX2) détecté par l'antenne (ANT1), puis
- une détection d'un déplacement du dispositif récepteur de puissance par rapport au dispositif émetteur de charge à partir d'une comparaison entre l'amplitude et la phase extraites et des seuils représentatifs d'un tel déplacement, puis
- une génération d'un signal de détection (SIGD) lorsqu'un tel déplacement est détecté.

11. Procédé selon la revendication 10, comprenant une réception, par un circuit logique du circuit de contrôle de charge (LGC), du signal de détection (SIGD) et un arrêt, par ce circuit logique, de la charge lorsqu'un déplacement du dispositif récepteur de puissance est détecté.

12. Procédé selon l'une des revendications 8 à 11, comprenant en outre une génération dudit signal radiofréquence de charge par au moins un pilote radiofréquence (RFD), et un arrêt, par le circuit de contrôle de charge (LGC), du pilote radiofréquence lorsqu'un déplacement du dispositif récepteur de puissance est détecté par le circuit de détection (LPCD).
